# EUROPÄISCHE PATENTSCHRIFT

(11) **EP 0 981 697 B1**
(45) Veröffentlichungstag und Bekanntmachung des Hinweises auf die Patenterteilung: **04.04.2001**
(21) Anmeldenummer: 98925563.3
(22) Anmeldetag: 09.05.1998
(51) Int. Cl.: F16H 1/36

(54) **PLANETENGETRIEBE**
PLANETARY GEAR
BOITE PLANETAIRE

(30) Priorität: 15.05.1997 DE 19720255
(43) Veröffentlichungstag der Anmeldung: 01.03.2000
(73) Patentinhaber: ZF FRIEDRICHSHAFEN AG, 88038 Friedrichshafen (DE)
(72) Erfinder: PESCHECK, Jürgen, D-88090 Immenstaad (DE); SCHULZ, Horst, D-88045 Friedrichshafen (DE)
(86) Internationale Anmeldenummer: EP9802724
(87) Internationale Veröffentlichungsnummer: WO9851943

(56) Entgegenhaltungen:
- WO-A-97/27410
- DE-C- 723 405
- FR-A- 636 367
- US-A- 1 372 866
- US-A- 1 499 763
- US-A- 2 512 349

## Beschreibung

Die Erfindung betrifft ein Planetengetriebe mit einem mit einer angetriebenen Zentralwelle verbundenen Sonnenrad, einem Hohlrad, einer Gruppe von ersten Stufenplaneten, einer Gruppe von zweiten Stufenplaneten, wobei alle Stufenplaneten in einem gemeinsamen Planetenträger gelagert sind, die Anzahl der zweiten Stufenplaneten der halben Anzahl der ersten Stufenplaneten entspricht, die großen Stufenräder der zweiten Stufenplaneten mit dem Sonnenrad in Eingriff stehen, die kleinen Stufenräder der zweiten Stufenplaneten gleichzeitig mit einem Paar von benachbarten großen Stufenrädern der ersten Stufenplaneten in Eingriff stehen und alle kleinen Stufenräder der ersten Stufenplaneten mit dem Hohlrad in Eingriff stehen.

Ein Planetengetriebe dieser Art ist in der nicht vorveröffentlichten internationalen Anmeldung WO-A-97-27410 (veröffentlicht am 31.7.1997) der Anmelderin beschrieben. Dieses Getriebe ist als sogenanntes Wolfrom-Getriebe ausgeführt, und eignet sich insbesondere sehr gut zur Darstellung von sehr hohen Gesamtübersetzungen bei einer guten Bauraumausnutzung. Ferner zeichnet es sich durch eine hohe Übertragungsqualität, hohen Wirkungsgrad und relativ geringe Massenträgheit sowie durch eine einfache Montage und geringe Fertigungskosten aus.

Aus der US 1499763 ist ein Wolfrom-Getriebe mit Stufenplaneten bekanntgeworden, bei dem die Hohlräder konisch ausgebildet sind und die Planetenachsen radial geneigt zur Getriebehauptachse verlaufen.

Wolfromgetriebe zeichnen sich vor allem durch hohe Übersetzungen bei einer sehr kompakten Bauform aus. Wolfromgetriebe weisen jedoch auch einige prinzipbedingte Nachteile auf. An den unter der hohen Momentenbelastung am Abtrieb stehenden Verzahnungen (Hohlräder und die mit den Hohlrädern in Eingriff stehenden Planeten) treten hohe Drehzahlen und Relativgeschwindigkeiten auf. Dies führt zu hohen Blindleistungen, einem verminderten Wirkungsgrad und unter bestimmten Betriebsbedingungen auch zu Problemen mit Vibrationen und Geräuschen. Der mit einer relativ hohen Drehgeschwindigkeit umlaufende Planetenträger trägt bei zu einem insgesamt großen Massenträgheitsmoment des Getriebes. Ein großes Massenträgheitsmoment erzeugt hohe Reaktionsmomente bei abrupten Drehgeschwindigkeitsänderungen.

Stirnradgetriebe weisen gegenüber Wolfromgetrieben zwar einen besseren Wirkungsgrad auf, erreichen jedoch nicht die hohe Bauraum- und Momentendichte von Planetengetrieben. Weitere Nachteile von Stirnradgetrieben gegenüber Planetengetrieben sind, daß diese nicht gut für eine koaxiale Anordnung von Antrieb und Abtrieb geeignet sind, und daß sich Teilungsfehler der Verzahnungen jedes Rads einer Räderkette voll auf die Übertragungsqualität zwischen Anund Abtrieb auswirken.

Mit herkömmlichen einstufigen Planetengetrieben lassen sich sehr hohe Übersetzungen aufgrund von Problemen mit der Zahngeometrie bei den dafür notwendigen sehr kleinen Sonnenrädern nur mit Einschränkungen realisieren.

Bekannte Planetengetriebe mit mehreren hintereinandergeschalteten Planetenstufen weisen eine hohe Teilezahl, sowie einen großen axialen Bauraum auf.

Aufgabe der Erfindung ist, hohe Übersetzungen bei einer hohen Bauraum- und Momentendichte zu erreichen, die Übertragungsqualität und den Wirkungsgrad deutlich zu verbessern, und dabei die Massenträgheit und die Neigung zu Vibrationen zu verringern. Darüberhinaus soll das Getriebe günstig in der Herstellung sein und keinen hohen Montageaufwand erfordern.

Die Aufgabe wird durch ein Planetengetriebe nach einem der unabhängigen Ansprüche 1 oder 2 gelöst. Vorteilhafte Ausgestaltungen und weitere Ausführungsformen der Erfindung sind durch die abhängigen Ansprüche gegeben.

Das Antriebsmoment wird vom Sonnenrad zunächst auf mehrere große Stufenräder der zweiten Stufenplaneten verteilt. Nach der Übersetzung durch die zweiten Stufenplaneten wird das Moment von den kleinen Stufenrädern der zweiten Stufenplaneten nochmals auf die doppelte Anzahl von Zahneingriffen mit den ersten Stufenplaneten verteilt. Mit -entsprechend der jeweiligen Übersetzungsstufe- steigendem Moment steigt in vorteilhafter Weise die Anzahl von Zahneingriffen, auf die dieses Moment verteilt wird. Es wird eine sehr gleichmäßige Belastungsverteilung erzielt.

Die mit hohen Momenten belasteten Getriebeteile, welche aufgrund ihrer notwendigen Dimension einen hohen Anteil an der Gesamtgetriebemasse haben, laufen langsam um. Alle schnellaufenden Getriebeteile sind keiner hohen Momentenbelastung ausgesetzt und sind daher entsprechend leicht gestaltet. Für das Getriebe ergibt sich daraus insgesamt ein sehr geringes Massenträgheitsmoment.

Niedrige Umfangsgeschwindigkeiten an den Verzahnungen ermöglichen den Einsatz von kompakten, schnelldrehenden Antriebsmotoren.

Die paarweise Anordung der ersten Stufenplaneten führt darüberhinaus zu einer einfachen Anpassung an verschiedene zu übertragende Momente mit vielen Gleichteilen. Für höhere Momente wird einfach ein weiteres Paar von ersten Stufenplaneten mit einem weiteren zweiten Stufenplaneten auf dem Planetenträger angeordnet.

Ein erfindungsgemäßes Getriebe weist den Vorteil auf, daß es hohe Übersetzungen auf engem Bauraum bei geringen internen Wälzleistungen ermöglicht. Es weist dadurch einen hohen Wirkungsgrad auf. Anfahr- und sonstige Reibungsmomente bleiben klein. Außerdem wirken sich die geringen Wälzleistungen positiv auf das Geräuschverhalten, sowie die Konstanz des geringen Getriebespiels über die Lebensdauer aus.

Bei der Ausführungsform gemäß Anspruch 1 als Umlaufrädergetriebe wird bei im wesentlichen waagrechter Lage der Getriebehauptachse und einer teilweisen Ölbefüllung des Getriebes ferner der Vorteil erzielt, daß die Stufenplaneten bei der Drehung des Planetenträgers regelmäßig ins öl getaucht werden. Sämtliche Verzahnungen und Planetenlager werden auf diese Weise optimal geschmiert.

Bei der alternativen Ausführungsform gemäß dem unabhängigen Anspruch 2 als Standgetriebe, weist das Getriebe eine um 1 höhere Gesamtübersetzung auf. Bei dieser Ausführungsform drehen Antriebs- und Abtriebswelle gleichsinnig.

Durch die erfindungsgemäße vorteilhafte Ausgestaltung gemäß Anspruch 3 ergeben sich weitgehend ausgewogene Verzahnungskräfte an den kleinen Stufenrädern der zweiten Stufenplaneten, wodurch deren Lagerung leichter und einfacher wird. Der genaue Winkelwert für die Anordnung der zweiten Stufenplaneten kann in Abhängigkeit von den Montagebedingungen gewählt werden.

Durch ein konisch ausgeführtes Hohlrad wird in Kombination mit einer axialen Verstellbarkeit des Hohlrads gegenüber den ersten Stufenplaneten entlang der Getriebehauptachse eine sehr gute Einstellbarbeit des Verzahnungsspiels zwischen den kleinen Stufenrädern der ersten Stufenplaneten und dem Hohlrad ermöglicht.

Mit einer Ausgestaltung gemäß Anspruch 5, wird der Vorteil erzielt, daß sich ein axiales Spiel der Lager der ersten Stufenplaneten nicht auf das Gesamtspiel des Getriebes auswirkt. Eine genaue Axialposition ist nicht erforderlich. Somit wird der Einstellaufwand reduziert und insgesamt ein geringeres Getriebespiel erzielt.

Eine weitere vorteilhafte Möglichkeit der Anpassung der kleinen Stufenräder an die Konizität des Hohlrades ist durch Anspruch 6 gegeben. In diesem Fall ist der Planetenträger einfacher zu fertigen, da keine geneigten Planetenachsen erforderlich sind.

Ein zylindrisches Hohlrad gemäß Anspruch 7 ist vorteilhaft einfach zu fertigen und muß bezüglich seiner axialen Position nicht justiert werden. So können die großen und teuren Einstellscheiben für das Hohlrad eingespart werden.

Mit dem in Anspruch 8 genannten weiteren Merkmal läßt sich das Verzahnungsspiel durch Einstellung der axialen Position der ersten Stufenplaneten entlang ihrer geneigten Drehachse einstellen. Die hierfür notwendigen kleinen Einstellscheiben, die axial zwischen Planetenlager und Planetenträger angeordnet sind, sind wesentlich kostengünstiger als die großen Einstellscheiben, welche für das Hohlrad benötigt werden.

Die Ausgestaltung der großen Stufenräder gemäß Anspruch 9 ermöglicht eine einfache Montage, wohingegen bei der Ausgestaltung nach Anspruch 10 eine Kompensation der Axialkraft mit dem Vorteil geringerer Lagerkräfte erzielt wird.

Die Anzahl aufwendig herstellbarer konischer Verzahnungen kann mittels der Ausgestaltung gemäß Anspruch 11 verkleinert werden.

Ein kinematisch exaktes Eingreifen der Verzahnungen der Stufenplaneten wird durch das in Anspruch 12 genannte Merkmal erreicht. Im Fall von zur Getriebehauptachse parallelen Achsen der Stufenplaneten liegt der gemeinsame Schnittpunkt im Unendlichen.

Die Vorteile einer Schrägverzahnung sind ein präziser geräuscharmer Lauf, sowie geringe Vibrationen.

Eine mindestens teilweise Kompensation der durch die Schrägverzahnung erzeugten Axialkräfte in den Stufenplaneten wird durch die in Anspruch 14 angegebenen Merkmale erzielt.

Eine nahezu vollständige Kompensation wird erreicht, wenn die Bedingung gemäß Anspruch 15 erfüllt ist. Insbesondere in Kombination mit zylindrischen Stufenrädern wird eine Selbsteinstellung der axialen Position ermöglicht. In diesem Fall kann auf eine axiale Lagerung der betreffenden Stufenplaneten ganz verzichtet werden.

Die Ausgestaltung gemäß Anspruch 16 ermöglicht insbesondere mit der weiteren Ausgestaltung gemäß Anspruch 17 eine sehr hohe Bauraum- und Drehmomentendichte.

Durch die fliegende Lagerung gemäß den Ansprüchen 18 und 19 werden mehrere Vorteile erzielt. Ganz offensichtlich können dadurch die ansonsten notwendigen Lager (z.B. Wälzlager) und damit Bauraum, Kosten und Montageaufwand eingespart werden. Außerdem findet an den fliegend gelagerten Rädern bedingt durch den paarweisen Eingriff ein Ausgleich von auch bei Präzisionsgetrieben noch vorhandenen fertigungsbedingten Teilungsfehlern statt. Somit wirkt sich diese Ausgestaltung positiv auf die Übertragungstreue und das Vibrationsverhalten des Getriebes aus. Durch die normalerweise in geringem Maße stets vorhandene Winkelbeweglichkeit des axial beabstandeten Lagers findet darüberhinaus eine Selbstzentrierung in den Zahneingriffen und damit ein Belastungsausgleich zwischen den Zahneingriffen der Stufenplaneten statt. Die fliegende Lagerung der kleinen Stufenräder der zweiten Stufenplaneten wird erst durch die erfindungsgemäße paarweise Anordnung von jeweils zwei ersten Stufenplaneten ermöglicht.

Ein einziges Hauptlager gemäß Anspruch 20 ermöglicht eine kompakte Bauform sowie eine einfache Montage.

Durch eine Integration der Lagerlaufbahnen in das Hohlrad und den Planetenträger wird deutlich Bauraum eingespart, so daß mehr Raum verfügbar ist, um bei räumlicher Unterbringung aller Räder innerhalb eines engen Bauraums eine hohe Übersetzung zu realisieren.

Durch eine zweiteilige Ausführung des Hohlrads gemäß Anspruch 22 wird eine axiale Einstellbarkeit des Hohlrades gegenüber dem Planetenträger und eine getrennte Fertigung der Teile ermöglicht. Insbesondere die Erfordernisse an verschiedene Einhärtetiefen der Verzahnungen bzw. Lagerlaufbahnen können auf diese Weise vorteilhaft berücksichtigt werden.

Ein Kreuzrollenlager als Hauptlager gemäß Anspruch 23 weist den Vorteil einer hohen Belastbarkeit insbesondere gegenüber Kippmomenten bei gleichzeitig hoher Präzision auf.

Durch das in Anspruch 24 genannte Merkmal kann der Fertigungsaufwand von einander zugeordeten Verzahnungen verkleinert werden. Komplizierte Montagebedingungen müssen bei der Wahl der Zähnezahlen nicht beachtet werden. Außerdem wird die Zahl von einzustellenden Teilen minimiert.

Die Ausgestaltung gemäß Anspruch 25 weist den Vorteil einer geringen Teilezahl auf, wohingegen die Ausgestaltung gemäß Anspruch 26 eine Austauschbarkeit von einzelnen Teilen zuläßt, und nachträgliche Korrekturen der Stellungszuordnung ermöglicht. Sofern es nicht erforderlich ist, die relative Drehstellung der Stufenräder eines Stufenplaneten einzustellen, können die Stufenplaneten einstückig hergestellt werden. Aus fertigungstechnischen Gründen kann es jedoch vorteilhaft sein, die Stufenplaneten auch in diesem Fall aus mehreren Teilen zusammenzusetzen.

Die weitere Ausgestaltung gemäß Anspruch 27 gewährleistet, daß eine definierte Zuordnung von Durchgangslöchern und Einschraubgewinden vorhanden ist.

Eine zweiteilige Ausgestaltung eines Stufenplaneten gemäß Anspruch 28 bietet Vorteile beim Herstellen einer bestimmten Stellungszuordnung der beiden Stufenräder eines Stufenplaneten. Die formschlüssige Verbindung ist vorteilhaft als Zahnwellenverbindung herstellbar, jedoch ist auch eine Keilwellenverbindung möglich. Eine spielfreie und axial unverschiebliche Verbindung der Stufenräder läßt sich durch ein geringes Übermaß des verzahnten Wellenfortsatzes und thermisches Fügen oder unter Einsatz von Klebstoff herstellen.

Mit dem Merkmal gemäß Anspruch 29 wird insbesondere bei Stufenplaneten mit fester relativer Drehstellungszuordnung zwischen den Stufenrädern die Montage vereinfacht. Bei der Montage der ersten Stufenplaneten braucht beispielsweise nicht darauf geachtet zu werden, welcher Zahn des kleinen Stufenrads in das Hohlrad eingreift.

Durch eine hohle Zentralwelle gemäß Anspruch 30 wird ein zentraler Durchlaß ermöglicht, durch den beispielsweise ein Kabelstrang hindurchgeführt werden kann.

Eine gleichmäßigere Belastung des Hohlrades läßt sich erzielen, wenn mehr als zwei Paare von ersten Stufenplaneten gleichzeitig mit dem Hohlrad in Eingriff sind. Durch Hinzufügen jeweils eines Paares von ersten Stufenplaneten und einem zweiten Stufenplaneten lassen sich höhere Belastungsanforderungen mit nur wenigen Änderungen (am Planetenträger) erfüllen.

Durch die Anordnung der Paare von ersten Stufenplaneten gemäß Anspruch 32 werden verschiedene Vorteile erzielt. In Kombination mit einem größeren Sonnenrad läßt sich so der zentrale Durchlaß wesentlich größer gestalten. Je nach Belastungsanforderungen ist es leicht möglich, weitere Paare von ersten Stufenplaneten mit zugeordneten zweiten Stufenplaneten am Innenumfang des Hohlrades zu verteilen.

Die Ausführungsform gemäß Anspruch 33 ermöglicht, den Antrieb exzentrisch anzuordnen, und damit den zentralen Durchlaß freizuhalten. Die Stirnradstufe ermöglicht darüberhinaus eine Vorübersetzung, so daß auch bei der durch das größere Sonnenrad begrenzten Übersetzung des Umlaufgetriebes eine hohe Gesamtübersetzung erzielt werden kann.

Die Ausgestaltung gemäß Anspruch 34 mit einer Buchse, die mit dem Abstützglied oder dem Abtrieb drehfest verbunden sein kann, weist den Vorteil auf, daß im zentralen Durchlaß nicht die hohen Drehzahlen des Sonnenrads auftreten. Auf diese Weise werden Beschädigungen beispielsweise an durchgeführten Kabelsträngen vermieden.

Je kleiner ein Verzahnungsspiel eingestellt ist, desto besser ist auch die Übertragungstreue des Getriebes, umso größer ist jedoch die Gefahr des Verklemmens. Auch aufgrund von thermischen Verformungen und Verschleiß ist das Verzahnungsspiel nicht beliebig klein einstellbar. Die Ausgestal-tung gemäß Anspruch 35 hat den Vorteil, daß das Verzahnungsspiel bei normalen Betriebsmomenten über die gesamte Lebensdauer des Getriebes immer Null ist, und ein Verklemmen dadurch verhindert wird, daß ein Stufenplanet eine axiale Ausweichbewegung ausführen kann, wenn sehr große Verzahnungskräfte auftreten, die beispielsweise durch einen Teilungsfehler in der Verzahnung des Hohlrads hervorgerufen werden.

Die Federkraft wird zweckmäßigerweise so gewählt, daß sie in einem Teillastbereich die drehmomentproportional anwachsenden Axialverzahnungskräfte ausgleichen kann.

Die weitere Ausgestaltung gemäß Anspruch 36 ist sehr platzsparend. Die Verstelleinrichtung ermöglicht, den maximalen Federweg vorzugeben.

Im folgenden wird die Erfindung mit Bezug auf die beiliegenden Zeichnungen näher erläutert wobei
- Fig. 1: eine Prinzipdarstellung der Räderanordung eines erfindungsgemäßen Planetengetriebes,
- Fig. 2: eine Schnittdarstellung einer Ausführungsform mit geneigten Stufenplanetenachsen eines erfindungsgemäßen Planetengetriebes,
- Fig. 3: eine Stirnansicht der Ausführungsform gemäß Fig. 2,
- Fig. 4: eine Schnittdarstellung einer weiteren Ausführungsform mit parallelen Stufenplanetenachsen,
- Fig. 5: eine Schnittdarstellung einer Ausführungsform mit parallelen Stufenplanetenachsen und einer Federanordnung zwischen zweiten Stufenplaneten und dem Planetenträger,
- Fig. 6: eine vergrößerte Darstellung der Federanordnung zwischen den zweiten Stufenplaneten und dem Planetenträger,
- Fig. 7: eine Prinzipdarstellung einer möglichen Anordnung von Hohlrad und ersten Stufenplaneten,
- Fig. 8: eine Prinzipdarstellung einer weiteren möglichen Anordnung von Hohlrad und ersten Stufenplaneten,
- Fig. 9: eine Prinzipdarstellung der Räderanordung eines weiteren erfindungsgemäßen Planetengetriebes mit zwei Paaren von ersten Stufenplaneten,
- Fig. 10: eine Prinzipdarstellung der Räderanordung eines weiteren erfindungsgemäßen Planetengetriebes mit drei Paaren von ersten Stufenplaneten,
- Fig. 11: einen Schnitt durch ein ausgeführtes erfindungsgemäßes Getriebe mit einer exzentrisch angeordneten Stirnradstufe und einem großen zentralen Durchlaß,
- Fig. 12: eine Seitenansicht eines ersten Teils eines zweiteiligen Stufenplaneten und
- Fig. 13: eine Stirnansicht eines ersten Teils eines zweiteiligen Stufenplaneten zeigen.

In den Figuren sind einander entsprechende Positionen mit gleichen Bezugszeichen versehen.

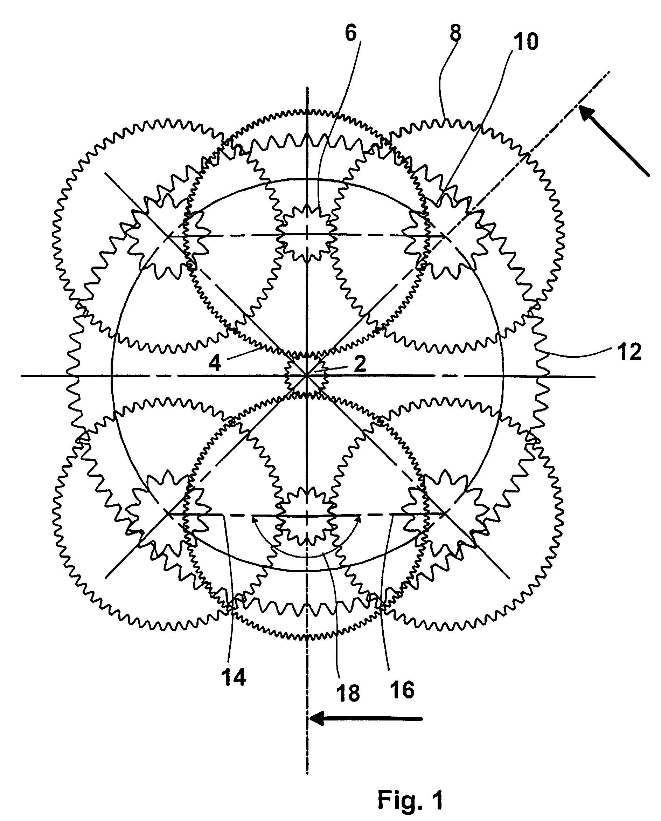

Die bezüglich der horizontalen und vertikalen Mittellinien symmetrische Prinzipdarstellung gemäß Fig. 1 zeigt das zentrale Sonnenrad 2, welches in einer Axialebene mit mehreren großen Stufenrädern 4 der zweiten Stufenplaneten in Eingriff ist. In einer anderen Ebene stehen die kleinen Stufenräder 6 der zweiten Stufenplaneten gleichzeitig mit einem Paar von benachbarten großen Stufenrädern 8 der ersten Stufenplaneten in Eingriff. In einer dritten Ebene stehen alle kleinen Stufenräder 10 der ersten Stufenplaneten mit dem Hohlrad 12 in Eingriff. Im Gegensatz zu herkömmlichen Planetengetrieben, bei denen Sonnenrad und Hohlrad den selben Modul aufweisen müssen, ist es bei dem Erfindungsgemäßen Getriebe möglich, den Modul für jede einzelne Übersetzungsstufe optimal zu wählen. Insbesondere bei der ersten Stufe zwischen Sonnenrad 2 und großen Stufenrädern 4 der zweiten Stufenplaneten, bei der sehr große Unterschiede in den Raddurchmessern vorhanden sein können, ist eine feinere Teilung bzw. eine höhere Zähnezahl wie dargestellt vorteilhaft, um Probleme bezüglich der Zahnform, wie z. B. Unterschnitt und/oder spitze Zähne zu vermeiden. In den weitere Stufen treten bei kleineren Drehzahlen höhere Verzahnungskräfte auf, so daß hier eine grobe Teilung vorteilhaft ist.

Mit der Anordnung können hohe Übersetzungen erzielt werden. Vorteilhaft ist, daß der Momentenfluß sich an mehreren Stellen auf (hier) jeweils zwei Pfade verteilt. Dadurch wird eine gleichmäßige Belastungsverteilung und ein Ausgleich von etwaigen Teilungsfehlern erzielt.

Aus der Fig. 1 ist weiterhin auch ersichtlich, daß die Verbindungslinien 14 und 16 vom Radmittelpunkt eines kleinen Stufenrads 6 eines zweiten Stufenplaneten zu den Radmittelpunkten der beiden benachbarten großen Stufenräder 2 der ersten Stufenplaneten einen Winkel 18 zwischen 180° und 195° einschließen. Die weitgehend symmetrische Anordnung des Sonnenrads 2 bzw. der kleinen Stufenräder 6 der zweiter Stufenplaneten zwischen großen Stufenrädern 4 bzw. 8 ermöglicht eine platzsparende fliegende Lagerung der betreffenden Räder in den Zahneingriffen.

Alle Stufenräder laufen mit der langsamen Winkelgeschwindigkeit des Planetenträgers (in Fig. 1 nicht dargestellt) um die Getriebehauptachse, wenn der Planetenträger der Getriebeabtrieb ist. Das Massenträgheitsmoment bleibt insgesamt sehr gering.

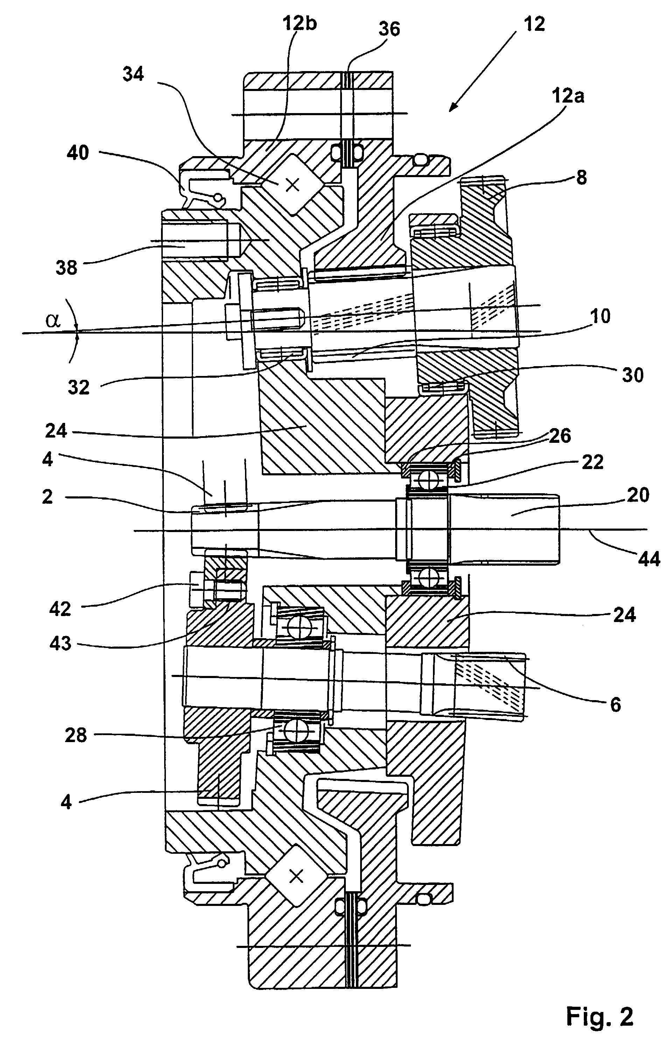

Fig. 2 zeigt eine Schnittdarstellung eines erfindungsgemäßen Getriebs. Der Schnittverlauf ist in Fig. 1 durch Pfeile gekennzeichnet. Bei dem in Fig. 2 gezeigten Planetengetriebe ist die Verzahnung des Sonnenrades 2 in der angetriebenen Zentralwelle 20 eingearbeitet. Die angetriebene Zentralwelle 20 ist hier durch fliegende Lagerung des Sonnenrades 2 zwischen den großen Stufenrädern 4 der zweiten Stufenplaneten und durch das axial beabstandete Lager 22 im Planetenträger 24 gelagert. Das hier konisch ausgebildete Sonnenrad 2 befindet sich in gleichzeitigem Eingriff mit den großen Stufenrädern 4 der zweiten Stufenplaneten. Mittels Einstellscheiben 26 läßt sich die axiale Position der angetriebenen Zentralwelle 20 im Planetenträger 24 und damit das Verzahnungsspiel zwischen Sonnenrad 2 und großen Stufenrädern 4 der zweiten Stufenplaneten einstellen.

Die zweiten Stufenplaneten mit den großen Stufenrädern 4 und den kleinen Stufenrädern 6 sind wiederum durch fliegende Lagerung der kleinen Stufenräder 6 zwischen den großen Stufenrädern 8 der ersten Stufenplaneten und durch jeweils ein weiteres, axial beabstandetes Lager 28 im Planetenträger 24 gelagert.

In Fig. 2 ist erkennbar, daß die zweiten Stufenplaneten in platzsparender Weise im wesentlichen den selben axialen Bauraum einnehmen, der bereits von den ersten Stufenplanneten beansprucht wird. Dies wird unter anderem dadurch ermöglicht, daß die großen Stufenräder 4, 8 der Stufenplaneten axial nicht alle auf einer Seite des Hohlrades 12a, sondern beiderseits des Hohlrades angeordnet sind.

Die großen Stufenräder 4 der zweiten Stufenplaneten sind annähernd zylindrisch ausgebildet. Dadurch wird der Vorteil erzielt, daß eine axiale Verschiebung eines zweiten Stufenplaneten entlang seiner radial geneigten Planetenachse keinen Einfluß auf das Verzahnungsspiel zwischen Sonnenrad 2 und großen Stufenrädern 4 der zweiten Stufenplaneten hat. Das kleine Stufenrad 6 der zweiten Stufenplaneten ist in gleichzeitigem Zahneingriff mit einem Paar von benachbarten großen Stufenrädern 8 von ersten Stufenplaneten.

Die durch den Winkel α engedeutete radiale Neigung der Stufenplaneten ist so gewählt, daß sich die Verlängerungen der Planetenachsen der ersten und zweiten Stufenplaneten in einem gemeinsamen Punkt in Verlängerung der Getriebehauptachse schneiden.

In der in Fig. 2 dargestellten Ausführungsform sind beide Stufenräder 8, 10 der ersten Stufenplaneten zylindrisch ausgebildet. Das Hohlrad 12a ist entsprechend der radialen Neigung der Planetenachse der ersten Stufenplaneten innen konisch ausgebildet. Eine axiale Verschiebung der ersten Stufenplaneten entlang der Planetenachse hat somit keinen Einfluß auf das Verzahnungsspiel zwischen den kleinen Stufenrädern 10 der ersten Stufenplaneten und dem Hohlrad 12a.

Die Schrägungswinkel der Verzahnungen der großen und kleinen Stufenräder der ersten Stufenplaneten 8, 10 sind so aufeinander abgestimmt, daß es zu einer Kompensation der aus der Schrägverzahnung herrührenden Axialkräfte kommt. Die axiale Position der ersten Stufenplaneten ist in diesem Beispiel also selbsteinstellend und ohne Auswirkung auf das Verzahnungsspiel zwischen kleinen Stufenrädern 10 und Hohlrad 12a. Vorteilhaft ist weiterhin, daß kein Axiallager für die ersten Stufenplaneten benötigt wird und die Lagerung mittels platzsparender Nadellager 30, 32 bewerkstelligt werden kann.

Das Verzahnungsspiel zwischen kleinem Stufenrad 10 der ersten Stufenplaneten und Hohlrad 12 ist durch axiales Verschieben des innenverzahnten Teils des Hohlrades 12a gegenüber dem Planetenträger 24 einstellbar. Zu diesem Zweck ist das Hohlrad 12 in der in Fig. 2 gezeigten Ausführungsform aus einem innenverzahnten Teil des Hohlrades 12a und einem das Hauptlager 34 aufnehmenden Teil 12b zusammengesetzt. Das Teil 12b ist in der dargestellten Ausführungsform also gleichzeitig der Aussenring eines integrierten Kreuzrollenlagers. Der axiale Abstand zwischen den Teilen 12a, 12b und damit das Verzahnungsspiel zwischen kleinen Stufenrädern 10 der ersten Stufenplaneten und Hohlrad 12a ist mittels einer Einstellscheibe 36 einstellbar.

In der Fig. 2 sind die Durchgangslöcher für die nicht dargestellten Schrauben zur Verbindung der Teile 12a, 12b dargestellt. Die Lagerlaufbahnen des als Kreuzrollenlager ausgeführten Hauptlagers 34 sind in platzsparender Weise in die betreffenden Bauteile 12b, 24 eingearbeitet.

In der Ausführungsform gemäß Fig. 2 ist vorgesehen, daß das Hohlrad 12 als Abstützglied und der Planetenträger 24 als Getriebeabtrieb dient. Die am Umfang verteilten Gewindebohrungen 38 dienen zur Befestigung von anzutreibenden Bauteilen. Die Dichtung 40 verhindert das Eindringen von Schmutz in das Getriebe und das Auslaufen von Schmiermittel. Ein Getriebegehäuse ist in Fig. 2 nicht dargestellt.

Mindestens ein großes Stufenrad 4 eines zweiten Stufenplaneten weist am Umfang verteilt Schrauben 42 einer Flanschverbindung auf. Mittels dieser Flanschverbindung ist die relative Drehstellung des großen Stufenrades 4 zum kleinen Stufenrad 6 des zweiten Stufenplaneten einstellbar. Hierzu weisen die entsprechenden Schraubendurchgangslöcher 43 ein Übermaß in tangentialer Richtung auf. Mittels dieser Flanschverbindung ist die exakte Stellung des fliegend gelagerten Sonnenrads in den Zahneingriffen der großen Stufenräder 4 einstellbar. In entsprechender Weise ist auch die Drehstellung der kleinen und großen Stufenräder mindestens eines ersten Stufenplaneten zueinander einstellbar. Zwischen diesen großen Stufenrädern der ersten Stufenplaneten sind die kleinen Stufenräder 6 der zweiten Stufenplaneten fliegend gelagert.

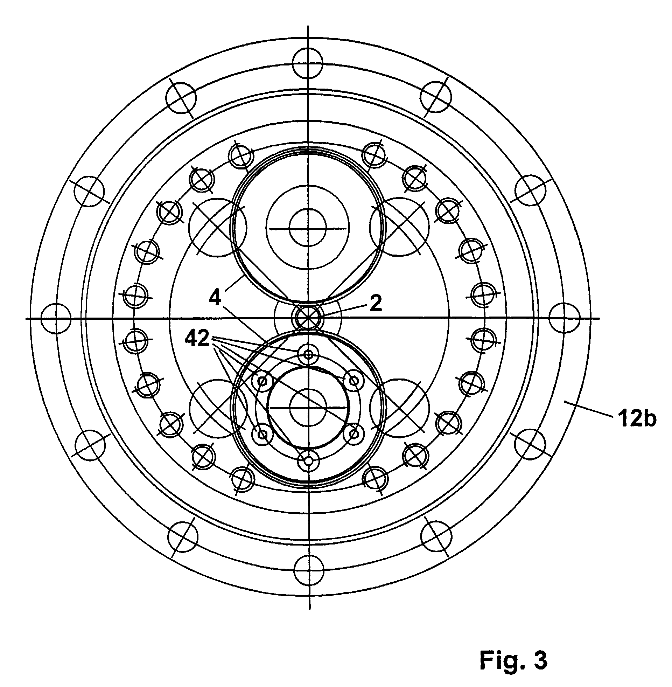

Fig. 3 zeigt eine abtriebsseitige Stirnansicht des in Fig. 2 im Schnitt dargestellten Getriebes. Neben dem Sonnenrad 2 sind zwei große Stufenräder 4 von zweiten Stufenplaneten, die Schrauben 42 der Flanschverbindung sowie der Lageraussenring (Hohlrad) 12b dargestellt.

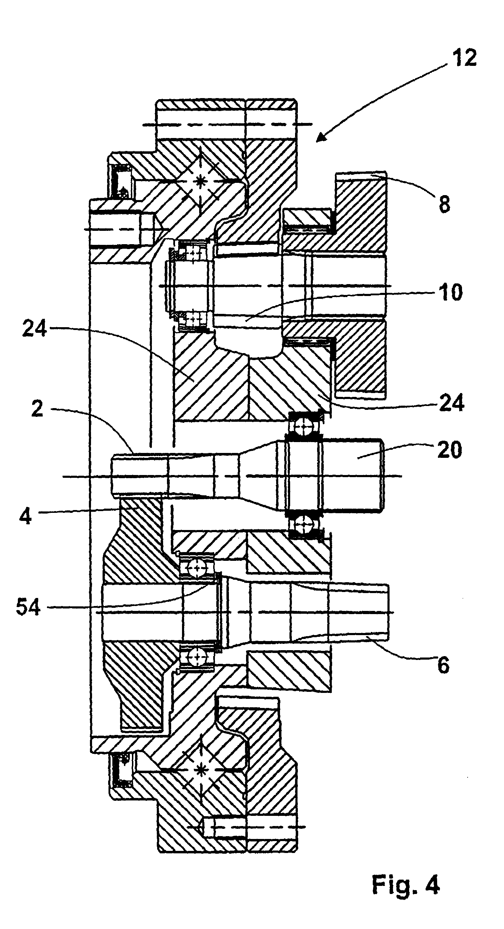

Fig. 4 zeigt eine weitere Ausführungsform eines erfindungsgemäßen Getriebes in entsprechender Darstellung wie Fig. 2. Sämtliche Planetenachsen sind hier parallel zur Getriebehauptachse. Das Sonnenrad 2 sowie die großen Stufenräder 4 der zweiten Stufenplaneten sind zylindrisch ausgebildet. Die kleinen Stufenräder 6 der zweiten Stufenplaneten sowie die Stufenräder 8, 10 der ersten Stufenplaneten sind ebenso wie das Hohlrad 12 konisch ausgebildet. Die großen und kleinen Stufenräder 8, 10 der ersten Stufenplaneten weisen gleiche Konusrichtung auf, was hinsichtlich einer einfachen Montierbarkeit von Vorteil ist. Das Verzahnungsspiel in der schnellaufenden Stufe zwischen dem Sonnenrad 2 und den großen Stufenrädern 4 ist hier nicht einstellbar, jedoch konstruktiv eng ausgelegt. Dafür braucht die axiale Position von Sonnenrad 2 und großen Stufenrädern 4 der zweiten Stufenplaneten nicht eingestellt zu werden. Das Verzahnungsspiel zwischen den konischen Stufenrädern 6, 8 ist einstellbar durch Einstellung der axialen Position der zweiten Stufenplaneten 4, 6 mittels Einstellscheiben 54.

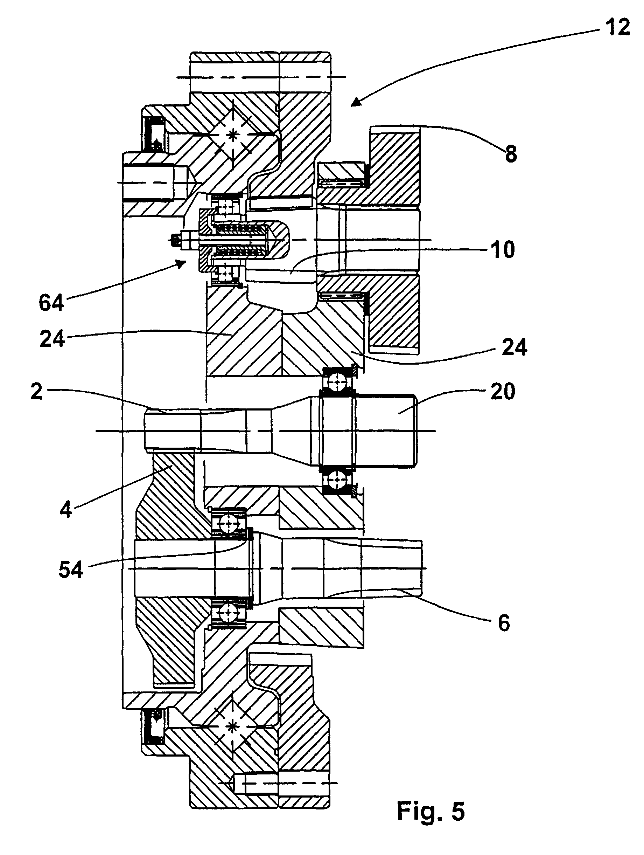

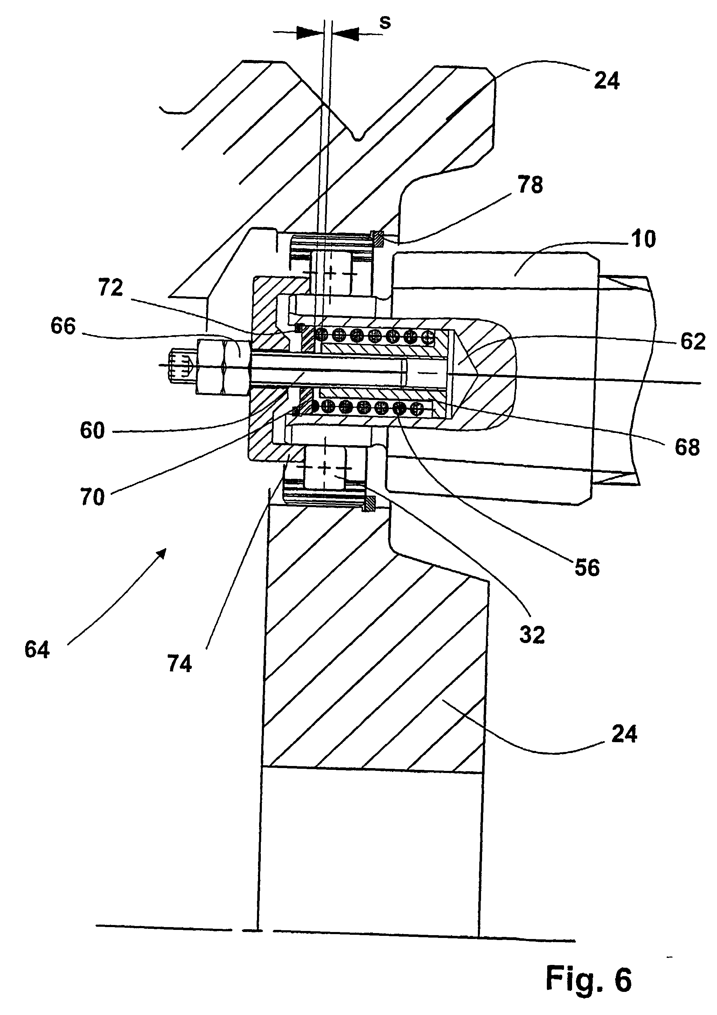

Die in Fig. 5 dargestellte Ausführungsform unterscheidet sich von der Ausführungsform nach Fig. 4 durch eine Federanordnung 64 zwischen zweiten Stufenplaneten 8, 10 und dem Planetenträger 24, welche in Fig. 6 vergrößert dargestellt ist.

Die Schraubenfeder 56 ist zwischen einer mittels Sprengring 72 im Stufenplaneten gesicherten Scheibe 70 und einem Bund am Ende der Hülse 68 in der Bohrung 62 im zweiten Stufenplaneten angeordnet. Die Hülse 68 überträgt die Federkraft auf den fest mit der Hülse verbundenen Gewindestift 60. Der Deckel 74 ist zwischen einer auf den Gewindestift geschraubten Mutter 66 und den Stirnseiten der Wälzkörper des Lagers 32 gespannt. Der Außenring des Lagers 32 ist durch einen Sprengring 78 im Planetenträger 24 axial fixiert. Die Federanordnung überträgt eine definierte Vorspannkraft zwischen Stufenplanet und Planetenträger, die den Stufenplaneten spielfrei im Konus des (in Fig 6 nicht dargestellten) Hohlrades 12 hält. Zwischen der Scheibe 70 und der Hülse 68 ist ein axialer Spalt s vorgesehen. Die effektive axiale Stellung des Stufenplaneten ist im Betrieb einer gewissen geringfügigen Schwankungsbreite unterworfen, die sich aus unvermeidlichen geringfügigen Teilungsfehlern ergibt. Der axiale Spalt s ist über die Mutter 66 so einstellbar, daß er diese Schwankungsbreite gerade abdeckt. Die Kraft der eingebauten Feder 56 ist so abgestimmt, daß die Axialkräfte der Verzahnung nur in einem Teillastbereich abgedeckt sind. Bei höherer Last wandert das Stufenrad axial aus bis zum Anschlag, gebildet durch die Scheibe 70 und die Buchse 68. Das Verzahnungsspiel zwischen Stufenplaneten und Hohlrad ist eliminiert. Einflüsse durch Temperaturdehungen oder Verschleiß werden durch die Federanordnung kompensiert. Trotzdem tritt ein Verklemmen auch bei Teilungsfehlern nicht auf, da der Stufenplanet in diesem Fall eine axiale Ausweichbewegung ausführen kann. Die Axialkraft, welche Ursache für diese Ausweichbewegung ist ergibt sich aus der Summe der Kräfte aus der Schrägverzahnung der beiden Stufenräder, die sich bei entsprechender Wahl der Schrägungswinkel in vorteilhafter Weise ausgleichen und zum größten Teil aus der Axialkraft welche bei einer radialen Belastung der Verzahnung in Folge der Konizität auftritt.

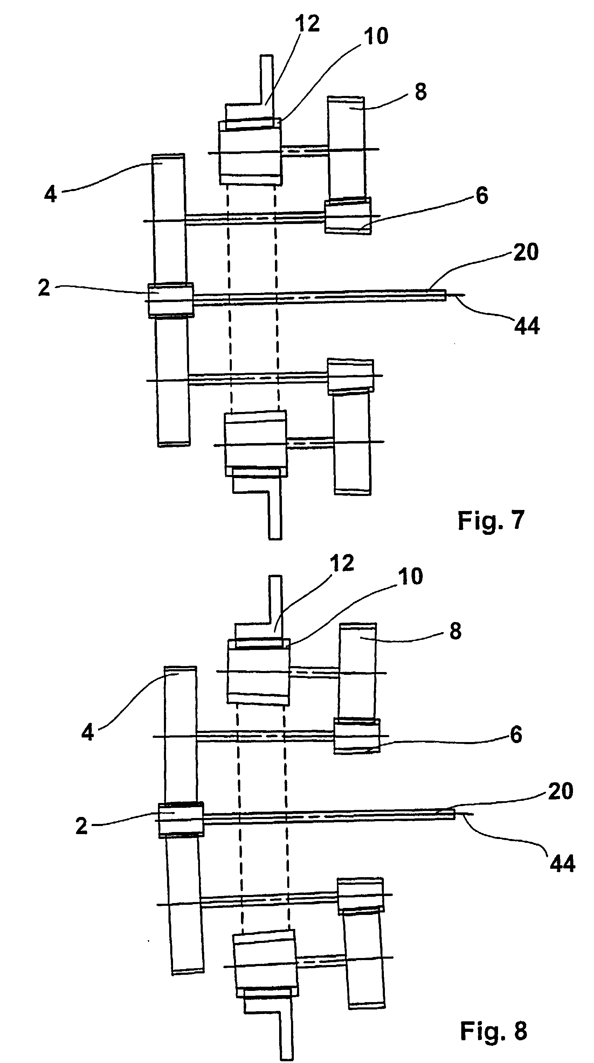

Die Fig. 7 und 8 zeigen skizzenhaft weitere vorteilhafte Anordnungen von ersten Stufenplaneten und Hohlrad 12. Die Mittellinie 44 entspricht bei diesen Figuren der Getriebehauptachse. Fig. 7 zeigt eine Anordnung mit konischem Hohlrad 12, zur Getriebehauptachse parallelen ersten Stufenplaneten 10, 8 und konischen kleinen und großen Stufenrädern der ersten Stufenplaneten. Die großen und kleinen Stufenräder weisen dabei entgegengesetzte Konusrichtung auf. Aus der Konizität herrührende Axialkräfte wirken in vorteilhafter Weise in entgegengesetzte Richtung. Außerdem ist bei dieser Anordnung die Einstellung des Verzahnungsspiels der Verzahnungen der ersten Stufenplaneten erleichtert.

Fig. 8 zeigt eine Anordnung mit zylindrischem Hohlrad 12, radial geneigten Planetenachsen der ersten Stufenplaneten und entsprechend angepaßter Konizität der kleinen Stufenräder 10 der ersten Stufenplaneten. Das Verzahnungsspiel zwischen kleinem Stufenrad 10 und Hohlrad 12 wird durch Einstellen der axialen Position der Stufenplaneten entlang ihrer radial geneigten Achse eingestellt. Bei dieser Ausführungsform können die teuren, großen Einstellscheiben 36 für das Hohlrad 12 (Fig. 2) eingespart werden.

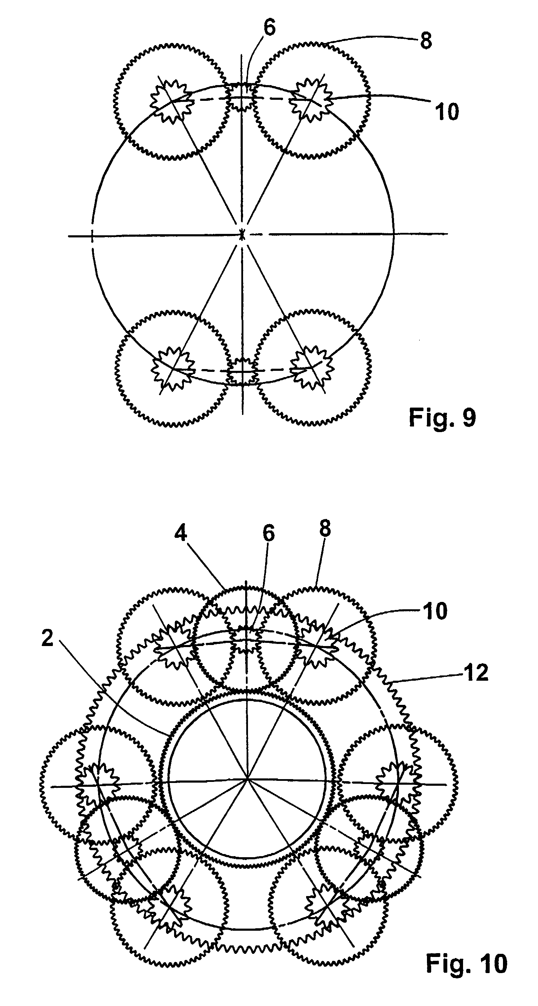

Fig. 9 und 10 zeigen schamatisch weitere Ausgestaltungen der Erfindung, bei denen die Verbindungslinien der Radmittelpunkte von zwei ein Paar bildenden ersten Stufenplaneten zum Radmittelpunkt des Sonnenrads (Getriebehauptachse) einen kleineren Winkel als 90° einschließen. Es ist hierbei nicht erforderlich, daß dieser Winkel ein ganzzahliger Bruchteil von 360° ist. Besipielsweise kann er 56,2° sein.

Fig. 9 zeigt zwei Paare von ersten Stufenplaneten 8,10 mit jeweils einem dazwischenliegenden kleinen Stufenrad 6 eines zweiten Stufenplaneten (Hohlrad , Sonnenrad und große Stufenräder der zweiten Stufenplaneten sind nicht dargestellt)

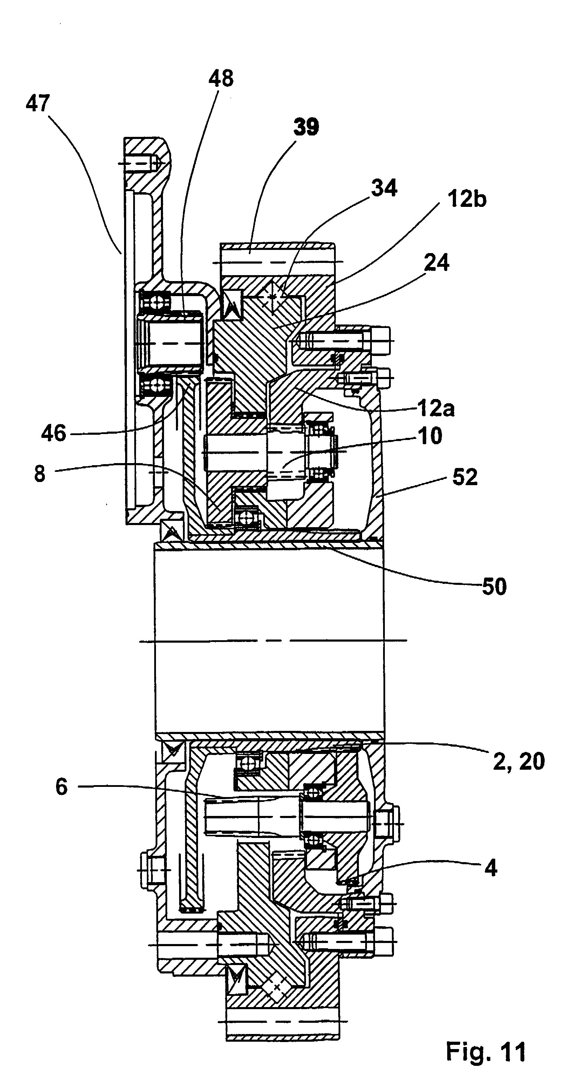

Fig. 10 zeigt drei Paare von ersten Stufenplaneten 8, 10, mit jeweils einem dazwischenliegenden kleinen Stufenrad 6 eines zweiten Stufenplaneten. Desweiteren sind in Fig. 10 die großen Stufenräder 4 der zweiten Stufenplaneten, welche mit dem zentralen Sonnenrad 2 in Eingriff sind dargestellt. Das Hohlrad 12 ist mit insgesamt sechs kleinen Stufenrädern 10 der ersten Stufenplaneten in Eingriff. Die hohe Zahl der Eingriffstellen wirkt sich positiv auf die Übertragungsqualität und Belastbarkeit aus. Das Sonnenrad 2 hat einen relativ großen Durchmesser und ermöglicht in Kombination mit einer hohl ausgebildeten, angetriebenen Zentralwelle 20 (Fig. 11) einen großen zentralen Durchlaß. Je nach Belastungs- und Übersetzungserfordernissen ist es natürlich ebenso möglich, mehr als drei Paare von ersten Stufenplaneten vorzusehen.

Fig. 11 zeigt im Schnitt ein erfindungsgemäßes Getriebe mit einem solchen zentralen Durchlaß. Der Antrieb ist exzentrisch am Motorflansch 47 angeordnet. Das Antriebsritzel 48 treibt das mit dem Sonnenrad 2 drehfest verbundene Stirnrad 46 an. Diese Stirnradstufe ermöglicht neben der exzentrischen Anordnung des Antriebs zusätzlich eine Vorübersetzung entsprechend dem Zähnezahnverhältnis von Ritzel 48 und Stirnrad 46. So sind auch mit einem großen zentralen Sonnenrad 2 hohe Gesamtübersetzungen erzielbar. Das zylindrische Sonnenrad 2 ist in Eingriff mit den ebenfalls zylindrisch ausgebildeten großen Stufenrädern 4 der zweiten Stufenplaneten. Die kleinen Stufenräder 6 der zweiten Stufenplaneten sind konisch ausgebildet und treiben die konischen großen Stufenräder 8 der ersten Stufenplaneten an. Von den konischen kleinen Stufenrädern 10 der ersten Stufenplaneten wird auf das konische Hohlrad 12 abgetrieben. Teile des Gehäuses 52 drehen mit der Drehzahl des Hohlrades 12, welches in der dargestellten Ausführung den Abtrieb darstellt. Die Bohrungen 39 in dem Teil 12b des Hohlrades mit der Wälzkörperlaufbahn für das Hauptlager 34 dienen zur Befestigung von anzutreibenden Teilen. Bei dieser Ausführungsform ist der Planetenträger 24 feststehend und das Hohlrad 12 rotierbar ausgebildet - es handelt sich um ein Standgetriebe. Der zentrale Durchlaß ist von einer Buchse 50 umgeben. Diese schließt das Gehäuse 52 nach innen ab und verhindert Beschädigungen, wenn Kabelstränge oder andere Teile durch den zentralen Durchlaß hindurchgeführt werden.

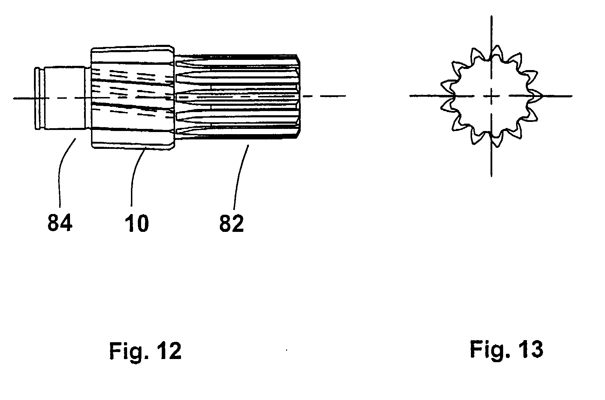

Die Figuren 12 und 13 zeigen schließlich zwei Ansichten eines ersten Teils eines zweiteilig ausgeführten ersten Stufenplaneten. Es weist axial aufeinanderfolgend drei Abschnitte auf. Der Lagerzapfen 84 dient zur Führung in einem Planetenlager 32 (Fig. 2). Das Stufenrad 10 weist eine schrägverzahnte Laufverzahnung auf. Im Wellenfortsatz 82 ist eine Formschlußverzahnung eingearbeitet. Die Laufverzahnung und die Formschlußverzahnung haben gleiche Zähnezahl. Im Übergangsbereich von der Laufverzahnung zur Formschlußverzahnung sind die Zahnlücken stellungsgleich, was in Fig. 13 erkennbar ist. Diese Stellungsgleichheit bietet Vorteile bei der Herstellung der Verzahnungen, da durch die Zahnlücke der angrenzenden Verzahnung ein Auslauf für Bearbeitungswerkzeuge gegeben ist. Bei der Montage braucht aufgrund der gleichen Zähnezahlen nicht auf eine Stellungszuordnung von Lauf- und Formschlußverzahnung geachtet zu werden.

In allen Ausführungsformen ist vorgesehen, daß das Verzahnungsspiel sämtlicher Verzahnungen, bei denen konische Räder beteiligt sind, durch entsprechend angepaßte Einstellscheiben bzw. Einstellringe einstellbar sind, bzw. durch Federanordnungen 64 eliminierbar sind.

Je nach den gewünschten Eigenschaften, oder der gewünschten Übersetzung sind natürlich auch andere Ausführungsformen insbesondere der Planetenräder denkbar (z.B. durchgehende Planeten, gleiche Zähnezahl aufweisende Planeten).

Natürlich ist aber auch eine sehr einfach herstellbare Ausführungsform möglich, bei der alle Planetenachsen parallel zur Getriebehauptachse verlaufen und alle Räder zylindrisch ausgebildet sind. Durch ein zylindrisch ausgebildetes Sonnenrad 2 wird der Vorteil einer Unempfindlichkeit des Verzahnungsspiels der Eingangsstufe, nämlich Sonnenrad/kleine Stufenräder der zweiten Stufenplaneten gegenüber einer relativen axialen Verschiebung der betreffenden Räder erzielt.

### Bezugszeichen

- 2: Sonnenrad
- 4: großes Stufenrad der zweiten Stufenplaneten
- 6: kleines Stufenrad der zweiten Stufenplaneten
- 8: großes Stufenrad der ersten Stufenplaneten
- 10: kleines Stufenrad der ersten Stufenplaneten
- 12: Hohlrad
- 12a: innenverzahntes Teil des Hohlrads
- 12b: Hohlradteil mit Wälzkörperlaufbahn
- 14: Verbindungslinie
- 16: Verbindungslinie
- 18: Winkel
- 20: angetriebe Zentralwelle
- 22: Lager
- 24: Planetenträger
- 26: Einstellscheiben
- 28: Lager
- 30: Lager
- 32: Lager
- 34: Hauptlager
- 36: Einstellscheibe
- 38: Gewindebohrung
- 39: Bohrung
- 40: Dichtung
- 42: Schrauben
- 43: Durchgangslöcher
- 44: Mittellinie
- 46: Stirnrad
- 47: Motorflansch
- 48: Ritzel
- 50: Buchse
- 52: Gehäuse
- 54: Einstellscheiben
- 56: Schraubenfeder
- 58: Buchse
- 60: Gewindestift
- 62: Bohrung
- 64: Federanordnung
- 66: Mutter (n)
- 68: Hülse mit Bund
- 70: Scheibe
- 72: Sprengring
- 74: Deckel
- 78: Sprengring
- 82: Wellenfortsatz
- 84: Lagerzapfen

## Patentansprüche

1. Planetengetriebe mit einem mit einer angetriebenen Zentralwelle (20) verbundenen Sonnenrad (2), einem Hohlrad (12), einer Gruppe von ersten Stufenplaneten (8, 10), einer Gruppe von zweiten Stufenplaneten (4,6), wobei alle Stufenplaneten in einem gemeinsamen Planetenträger (24) gelagert sind, die Anzahl der zweiten Stufenplaneten (4, 6) der halben Anzahl der ersten Stufenplaneten (8, 10) entspricht, die großen Stufenräder (4) der zweiten Stufenplaneten mit dem Sonnenrad (2) in Eingriff stehen, die kleinen Stufenräder (6) der zweiten Stufenplaneten gleichzeitig mit einem Paar von benachbarten großen Stufenrädern (8) der ersten Stufenplaneten in Eingriff stehen, alle kleinen Stufenräder (10) der ersten Stufenplaneten mit dem Hohlrad (12) in Eingriff stehen, der Planetenträger (24) der Getriebeabtrieb ist und das Hohlrad (12) das Abstützglied ist.

2. Planetengetriebe mit einem mit einer angetriebenen Zentralwelle (20) verbundenen Sonnenrad (2), einem Hohlrad (12), einer Gruppe von ersten Stufenplaneten (8, 10), einer Gruppe von zweiten Stufenplaneten (4,6), wobei alle Stufenplaneten in einem gemeinsamen Planetenträger (24) gelagert sind, die Anzahl der zweiten Stufenplaneten (4, 6) der halben Anzahl der ersten Stufenplaneten (8, 10) entspricht, die großen Stufenräder (4) der zweiten Stufenplaneten mit dem Sonnenrad (2) in Eingriff stehen, die kleinen Stufenräder (6) der zweiten Stufenplaneten gleichzeitig mit einem Paar von benachbarten großen Stufenrädern (8) der ersten Stufenplaneten in Eingriff stehen, alle kleinen Stufenräder (10) der ersten Stufenplaneten mit dem Hohlrad (12) in Eingriff stehen, der Planetenträger (24) das Abstützglied ist und das Hohlrad (12) der Getriebeabtrieb ist.

3. Planetengetriebe nach Anspruch 1 oder 2, dadurch **gekennzeichnet**, daß die Verbindungslinien (14, 16) vom Radmittelpunkt eines kleinen Stufenrads (6) eines zweiten Stufenplaneten zu den Radmittelpunkten der beiden benachbarten großen Stufenräder (8) der ersten Stufenplaneten einen Winkel (18) zwischen 180° und 195° einschließen.

4. Planetengetriebe nach einem der Ansprüche 1 bis 3, dadurch **gekennzeichnet**, daß das Hohlrad (12) innen konisch ausgeführt ist.

5. Planetengetriebe nach Anspruch 4, dadurch **gekennzeichnet,** daß mindestens die kleinen Stufenräder (10) der ersten Stufenplaneten zylindrisch ausgeführt sind und die Drehachsen der ersten Stufenplaneten (8, 10) um einen Winkel zur Getriebehauptachse radial geneigt sind.

6. Planetengetriebe nach Anspruch 4, dadurch **gekennzeichnet,** daß die kleinen Stufenräder (10) der ersten Stufenplaneten konisch ausgeführt sind und die Drehachsen der ersten Stufenplaneten parallel zur Getriebehauptachse sind.

7. Planetengetriebe nach einem der Ansprüche 1 bis 3, dadurch **gekennzeichnet**, daß Hohlrad (12) innen zylindrisch ausgeführt ist.

8. Planetengetriebe nach Anspruch 7, dadurch **gekennzeichnet,** daß die kleinen Stufenräder (10) der ersten Stufenplaneten konisch ausgeführt sind und die Drehachsen der ersten Stufenplaneten (8,10) um einen Winkel zur Getriebehauptachse radial geneigt sind.

9. Planetengetriebe nach Anspruch 6 oder 8, dadurch **gekennzeichnet**, daß die großen Stufenräder (8) der ersten Stufenplaneten konisch ausgeführt sind und gleiche Konusrichtung aufweisen, wie die kleinen Stufenräder (10) der ersten Stufenplaneten.

10. Planetengetriebe nach Anspruch 6 oder 8, dadurch **gekennzeichnet**, daß die großen Stufenräder (8) der ersten Stufenplaneten konisch ausgeführt sind und entgegengesetzte Konusrichtung aufweisen, wie die kleinen Stufenräder (10) der ersten Stufenplaneten.

11. Planetengetriebe nach mindestens einem der Ansprüche 1 bis 8, dadurch **gekennzeichnet**, daß die großen Stufenräder (4, 8) mindestens einer Gruppe von Stufenplaneten annähernd zylindrisch ausgebildet sind, und die mit diesen Stufenrädern in Eingriff stehenden Räder (2, 6) konisch ausgebildet sind.

12. Planetengetriebe nach mindestens einem der Ansprüche 1 bis 11, dadurch **gekennzeichnet**, daß alle Planetenachsen und die Getriebehauptachse sich in einem gemeinsamen Punkt schneiden.

13. Planetengetriebe nach mindestens einem der Ansprüche 1 bis 12, dadurch **gekennzeichnet**, daß mindestens eine Gruppe von miteinander verzahnten Rädern schräg verzahnt ist.

14. Planetengetriebe nach Anspruch 13, dadurch **gekennzeichnet,** daß die beiden Stufenräder mindestens einer Gruppe von Stufenplaneten schräg verzahnt sind, und die Schrägungswinkel der Verzahnungen der beiden Stufenräder gleichen Richtungssinn haben.

15. Planetengetriebe nach Anspruch 14, dadurch **gekennzeichnet,** daß das Verhältnis der Tangens der Schrägungswinkel in etwa gleich dem Durchmesserverhältnis der Wälzkreise der Stufenräder der Stufenplaneten ist.

16. Planetengetriebe nach mindestens einem der Ansprüche 1 bis 15, dadurch **gekennzeichnet**, daß die zweiten Stufenplaneten (4, 6) im wesentlichen den selben axialen Bauraum einnehmen, der bereits von den ersten Stufenplaneten (8, 10) beansprucht wird.

17. Planetengetriebe nach Anspruch 16, dadurch **gekennzeichnet,** daß die großen Stufenräder (8) der ersten Stufenplaneten axial auf der einen Seite des Hohlrades (12a) und die großen Stufenräder (4) der zweiten Stufenplaneten axial auf der anderen Seite des Hohlrades (12a) angeordnet sind.

18. Planetengetriebe nach mindestens einem der Ansprüche 1 bis 17, dadurch **gekennzeichnet**, daß die zweiten Stufenplaneten (4, 6) durch fliegende Lagerung der kleinen Stufenräder (6) zwischen jeweils zwei großen Stufenrädern (8) der ersten Stufenplaneten und durch jeweils ein weiteres axial beabstandetes Lager (28) im Planetenträger (24) gelagert sind.

19. Planetengetriebe nach mindestens einem der Ansprüche 1 bis 18, dadurch **gekennzeichnet**, daß die angetriebene Zentralwelle (20) durch fliegende Lagerung des Sonnenrades (2) zwischen den großen Stufenrädern (4) der zweiten Stufenplaneten und durch ein weiteres axial beabstandetes Lager (22) gelagert ist.

20. Planetengetriebe nach mindestens einem der Ansprüche 1 bis 19, dadurch **gekennzeichnet**, daß zwischen Abstützglied und Getriebeabtrieb ein Hauptlager (34) angeordnet ist, welches die Betriebskräfte aufnimmt.

21. Planetengetriebe nach Anspruch 20, dadurch **gekennzeichnet,** daß die Wälzkörper-Laufbahnen des Hauptlagers (34) direkt in die betreffenden Bauteile (12b, 24) eingearbeitet sind.

22. Planetengetriebe nach Anspruch 21, dadurch **gekennzeichnet,** daß das Hohlrad (12) ein erstes innenverzahntes Teil (12a), und ein zweites Teil (12b) mit eingearbeiteter Wälzkörper-Laufbahn aufweist.

23. Planetengetriebe nach mindestens einem der Ansprüche 20 bis 22, dadurch **gekennzeichnet**, daß das Hauptlager (34) als Kreuzrollenlager ausgebildet ist.

24. Planetengetriebe nach mindestens einem der Ansprüche 1 bis 23, dadurch **gekennzeichnet**, daß die relative Drehstellung der großen und kleinen Stufenräder jeweils mindestens eines der Stufenplaneten, dessen große Stufenräder mit einem zwischen diesen Stufenrädern angeordneten Rad gleichzeitig in Eingriff sind, wenigstens einmalig einstellbar ist.

25. Planetengetriebe nach Anspruch 24, dadurch **gekennzeichnet,** daß die relative Drehstellung der großen und kleinen Stufenräder eines Stufenplaneten beim Montagevorgang durch Kleben und/oder thermisches Aufschrumpfen eines Stufenrads auf eine mit dem anderen Stufenrad fest verbundene Welle einstellbar ist.

26. Planetengetriebe nach Anspruch 25, dadurch **gekennzeichnet,** daß die relative Drehstellung der großen und kleinen Stufenräder eines Stufenplaneten mittels einer lösbaren Flanschverbindung einstellbar ist, bei welcher die Befestigungselemente (42) im losen Zustand ein tangentiales Spiel in zugeordneten Durchgangslöchern (43) haben.

27. Planetengetriebe nach Anspruch 26, dadurch **gekennzeichnet,** daß die Zähnezahl des einstellbaren Stufenrads (8) nicht ganzzahlig durch die Anzahl der Durchgangslöcher (43) teilbar ist.

28. Planetengetriebe nach mindestens einem der Ansprüche 1 bis 23, dadurch **gekennzeichnet**, daß ein erstes Teil eines zweiteiligen Stufenplaneten (4,6 , 8,10) einen verzahnten Wellenfortsatz (82) zur formschlüssigen Verbindung mit einer innenverzahnten Nabe eines großen Stufenrads (4, 8) aufweist, die Verzahnung des Wellenfortsatzes die gleiche Zähnezahl wie die Laufverzahnung des kleinen Stufenrads (6, 10) aufweist, und die Zahnlücken der beiden Verzahnungen im Übergangsbereich etwa stellungsgleich sind.

29. Planetengetriebe nach mindestens einem der Ansprüche 1 bis 28, dadurch **gekennzeichnet**, daß bei mindestens einer Gruppe von Stufenplaneten (8,10 , 4,6) die Zähnezahl der großen Stufenräder (8, 4) ganzzahlig durch die Zähnezahl der kleinen Stufenräder (10, 6) teilbar ist.

30. Planetengetriebe nach mindestens einem der Ansprüche 1 bis 29, dadurch **gekennzeichnet**, daß die angetriebene Zentralwelle (20) hohl ausgebildet ist.

31. Planetengetriebe nach mindestens einem der Ansprüche 1 bis 30, dadurch **gekennzeichnet**, daß die Verbindungslinien der Radmittelpunkte von zwei ein Paar bildenden ersten Stufenplaneten zum Radmittelpunkt des Sonnenrads (Getriebehauptachse) einen kleineren Winkel als 90° einschließen.

32. Planetengetriebe nach mindestens einem der Ansprüche 1 bis 31, dadurch **gekennzeichnet**, daß die mit dem Sonnenrad (2) verbundene Zentralwelle (20) von einer exzentrisch angeordneten Stirnradstufe (46, 48) angetrieben ist.

33. Planetengetriebe nach mindestens einem der Ansprüche 30 bis 32, dadurch **gekennzeichnet**, daß in der hohlen Zentralwelle (20) eine Buchse (50) angeordnet ist.

34. Planetengetriebe nach mindestens einem der Ansprüche 6 oder 9 bis 33, dadurch **gekennzeichnet,** daß die ersten Stufenplaneten (8, 10) entlang ihrer Planetenachse axial verschieblich im Planetenträger (24) gelagert sind, und jeweils ein Federelement (56) zur Übertragung einer das Verzahnungsspiel ausgleichenden Axialkraft zwischen erstem Stufenplanet und Planetenträger angeordnet ist.

35. Planetengetriebe nach Anspruch 34, dadurch **gekennzeichnet,** daß das Federelement eine vorspannbare Schraubenfeder (56) ist, welche in einer Bohrung (62) im Stufenplaneten (8, 10) zwischen einem sich im Stufenplaneten befestigten Stützelement (70) und einem axial an den Planetenträger (24) gekoppelten weiteren Stützelement (68) angeordnet ist, und daß eine Verstelleinrichtung zur Einstellung eines maximalen Federwegs vorgesehen ist.

## Claims

1. Planetary gear, with a sun gear (2) linked to a driven central shaft (20), with a ring gear (12), with a group of first stepped planetary gears (8, 10) and a group of second stepped planetary gears (4, 6), with all stepped planetary gears being supported in a common planet carrier (24), the number of second stepped planetary gears (4 , 6) corresponding to half the number of first stepped planetary gears (8, 10), the large stepped gears (4) of the second stepped planetary gears meshing with the sun gear (2), while at the same time the small stepped gears (6) of the second stepped planetary gears meshing with a pair of adjacent large stepped gears (8) of the first stepped planetary gears, all small stepped gears (10) of the first stepped planetary gears meshing with the ring gear (12), the planet carrier (24) being the transmission output and the ring gear (12) being the supporting element.

2. Planetary gear, with a sun gear (2) linked to a driven central shaft (20), with a ring gear (12), with a group of first stepped planetary gears (8, 10) and a group of second stepped planetary gears (4, 6), with all stepped planetary gears being supported in a common planet carrier (24), the number of second stepped planetary gears (4 , 6) corresponding to half the number of first stepped planetary gears (8, 10), the large stepped gears (4) of the second stepped planetary gears meshing with the sun gear (2), while at the same time the small stepped gears (6) of the second stepped planetary gears meshing with a pair of adjacent large stepped gears (8) of the first stepped planetary gears, all small stepped gears (10) of the first stepped planetary gears meshing with the ring gear (12), the planet carrier (24) being the supporting element and the ring gear (12) the transmission output.

3. Planetary gear according to claim 1 or 2, ***characterized*** in that the connecting lines (14, 16) from the gear center of a small stepped gear (6) of a second stepped planetary gear to the gear centers of the two adjacent large stepped gears (8) of the first stepped planetary gears contain an angle (18) between 180° and 195°.

4. Planetary gear according to one of the claims 1 to 3, ***characterized*** in that the inside of the ring gear (12) is tapered.

5. Planetary gear according to claim 4, ***characterized*** in that at least the small stepped gears (10) of the first stepped planetary gears are of cylindrical design and the rotating axes of the first stepped planetary gears (8, 10) are arranged in a radial angle in relation to the transmission main axis.

6. Planetary gear according to claim 4, ***characterized*** in that the small stepped gears (10) of the first stepped planetary gears are of tapered design and the rotating axes of the first stepped planetary gears are arranged parallel to the transmission main axis.

7. Planetary gear according to one of the claims 1 to 3, ***characterized*** in that the inside of the ring gear (12) is of cylindrical design.

8. Planetary gear according to claim 7, ***characterized*** in that the small stepped gears (10) of the first stepped planetary gears are of tapered design and the rotating axes of the first stepped planetary gears (8, 10) are arranged in a radial angle in relation to the transmission main axis.

9. Planetary gear according to claim 6 or 8, ***characterized*** in that the large stepped gears (8) of the first stepped planetary gears are of tapered design and have the same taper alignment as the small stepped gears (10) of the first stepped planetary gears.

10. Planetary gear according to claim 6 or 8, ***characterized*** in that the large stepped gears (8) of the first stepped planetary gears are of tapered design and taper alignment is opposite to that of the small stepped gears (10) of the first stepped planetary gears.

11. Planetary gear according to at least one of the claims 1 to 8, ***characterized*** in that the large stepped gears (4, 8) of at least one group of stepped planetary gears are of approximately cylindrical design and the gears (2, 6) meshing with these stepped gears are of tapered design.

12. Planetary gear according to at least one of the claims 1 to 11, ***characterized*** in that all planet axes and the transmission main axis intersect in one common point.

13. Planetary gear according to at least one of the claims 1 to 12, ***characterized*** in that at least one group of meshing gears is of helical design.

14. Planetary gear according to claim 13, ***characterized*** in that the two stepped gears of at least one group of stepped planetary gears are of helical design and the lead angles of the gear teeth of the two stepped gears have the same direction.

15. Planetary gear according to claim 14, ***characterized*** in that the tangent proportion of the lead angles is approximately equal to the diameter proportion of the pitch circles of the stepped gears of the stepped planetary gears.

16. Planetary gear according to at least one of the claims 1 to 15, ***characterized*** in that the second stepped planetary gears (4, 6) occupy essentially the same axial installation space already occupied by the first stepped planetary gears (8, 10).

17. Planetary gear according to claim 16, ***characterized*** in that the large stepped gears (8) of the first stepped planetary gears are axially arranged on the one side of the internal gear (12a) while the large stepped gears (4) of the second stepped planetary gears are axially arranged on the other side of the internal gear (12a).

18. Planetary gear according to at least one of the claims 1 to 17, ***characterized*** in that the second stepped planetary gears (4, 6) are supported in the planet carrier (24) by means of a floating support of the small stepped gears (6) between two large stepped gears (8) of the first stepped planetary gears and additional axially distant bearings (28) each.

19. Planetary gear according to at least one of the claims 1 to 18, ***characterized*** in that the driven central shaft (20) is supported by floating support of the sun gear (2) between the large stepped gears (4) of the second stepped planetary gears and by an additional axially distant bearing (22).

20. Planetary gear according to at least one of the claims 1 to 19, ***characterized*** in that a main bearing (34) absorbing the working load is arranged between supporting element and transmission output.

21. Planetary gear according to claim 20, ***characterized*** in that rolling element raceways of the main bearing (34) are incorporated in the components (12b, 24).

22. Planetary gear according to claim 21, ***characterized*** in that the ring gear (12) features a first internal-toothed part (12a) and a second part (12b) with incorporated rolling element raceway.

23. Planetary gear according to at least one of the claims 20 to 22, ***characterized*** in that the main bearing (34) is a cross roller bearing.

24. Planetary gear according to at least one of the claims 1 to 23, ***characterized*** in that relative rotary position of the large and small stepped gears of at least one of the stepped planetary gears, whose large stepped gears simultaneously mesh with a gear arranged between these stepped gears, is adjustable at least once.

25. Planetary gear according to claim 24, ***characterized*** in that relative rotary position of the large and small stepped gears of a stepped planetary gear is adjustable during assembly by means of gluing and/or heat-shrink fitting of a stepped gear on a shaft firmly linked to the other stepped gear.

26. Planetary gear according to claim 25, ***characterized*** in that relative rotary position of the large and small stepped gears of a stepped planetary gear is adjustable by means of a detachable flange connection, in which the fastening elements (42) in their loose condition have a tangential play in assigned through holes (43).

27. Planetary gear according to claim 26, ***characterized*** in that the number of teeth of the adjustable stepped gear (8) is not divisible by any integer of through holes (43).

28. Planetary gear according to at least one of the claims 1 to 23, ***characterized*** in that a first part of a two-part stepped planetary gear (4, 6, 8, 10) features a toothed shaft extension (82) for form-locking engagement with an internally toothed hub of a large stepped gear (4, 8), with the gearing of the shaft extension having the same number of teeth as the meshing gears of the small stepped gear (6, 10) and the tooth gaps of the two gears being roughly in the same position in the transition area.

29. Planetary gear according to at least one of the claims 1 to 28, ***characterized*** in that for at least one group of stepped planetary gears (8, 10, 4, 6) the number of teeth of the large stepped gears (8, 4) is divisible by any whole number of teeth of the small stepped gears (10, 6).

30. Planetary gear according to at least one of the claims 1 to 29, ***characterized*** in that the driven central shaft (20) is hollow.

31. Planetary gear according to at least one of the claims 1 to 30, ***characterized*** in that connecting lines of the gear centers of two pairing first stepped planetary gears to the gear center of the sun gear (transmission main axis) contain an angle smaller than 90°.

32. Planetary gear according to at least one of the claims 1 to 31, ***characterized*** in that the central shaft (20), which is linked to the sun gear (2), is driven by an eccentrically arranged spur gear set (46, 48).

33. Planetary gear according to at least one of the claims 30 to 32, ***characterized*** in that a sleeve (50) is placed in the hollow central shaft (20).

34. Planetary gear according to at least claim 6 or one of the claims 9 to 33, ***characterized*** in that the first stepped planetary gears (8, 10) are supported in the planet carrier (24) in a manner that they are axially displaceable along their planet axis, and spring elements (56) are disposed between first stepped planet and planet carrier to transmit the axial force for gear play compensation.

35. Planetary gear according to claim 34, ***characterized*** in that the spring element is a pre-loadable coil spring (56), which is placed in a bore hole (62) in the stepped planetary gears (8, 10) between a supporting element (70), which is attached to the stepped planetary gear, and another supporting element (68), which is axially attached to the planet carrier (24), and in that an adjusting element is installed to ensure maximum spring travel.

## Revendications

1. Boîte de vitesses planétaire dotée d'un pignon solaire (2) lié à un arbre central mené (20), d'une couronne (12), d'un groupe de premiers satellites étagés (8, 10), d'un groupe de deuxièmes satellites étagés (4, 6), sachant que tous les satellites étagés sont logés dans un porte-satellites commun (24), le nombre des deuxièmes satellites étagés (4, 6) correspondant à la moitié du nombre des premiers satellites étagés (8, 10), les grandes roues étagées (4) des deuxièmes satellites étagés engrenant avec le pignon solaire (2) et les petites roues étagées (6) des deuxièmes satellites étagés engrenant, en même temps, avec un train de grandes roues étagées associé (8) des premiers satellites étagés, et sachant que toutes les petites roues étagées (10) des premiers satellites étagés engrènent avec la couronne (12) et sachant que le porte-satellites (24) constitue la sortie de la boîte de vitesses et la couronne (12) constitue l'élément d'appui.

2. Boîte de vitesses planétaire dotée d'un pignon solaire (2) lié à un arbre central mené (20), d'une couronne (12), d'un groupe de premiers satellites étagés (8, 10), d'un groupe de deuxièmes satellites étagés (4, 6), sachant que tous les satellites étagés sont logés dans un porte-satellites commun (24), le nombre des deuxièmes satellites étagés (4, 6) correspondant à la moitié du nombre des premiers satellites étagés (8, 10), les grandes roues étagées (4) des deuxièmes satellites étagés engrenant avec le pignon solaire (2) et les petites roues étagées (6) des deuxièmes satellites étagés engrenant, en même temps, avec un train de grandes roues étagées associé (8) des premiers satellites étagés, et sachant que toutes les petites roues étagées (10) des premiers satellites étagés engrènent avec la couronne (12) et sachant que le porte-satellites (24) constitue l'élément d'appui et la couronne (12) constitue la sortie de la boîte de vitesses.

3. Boîte de vitesses planétaire selon une des revendications 1 ou 2, **caractérisée** en ce que les lignes de jonction (14, 16) à partir du centre d'une petite roue étagée (6) d'un deuxième satellite étagé jusqu'aux centres des deux grandes roues étagées voisines (8) des premiers satellites étagés sont compris dans un angle (18) entre 180° et 195°.

4. Boîte de vitesses planétaire selon une des revendications 1 à 3, **caractérisée** en ce que la couronne (12) présente une forme intérieure conique.

5. Boîte de vitesses planétaire selon la revendication 4, **caractérisée** en ce que au moins les petites roues étagées (10) des premiers satellites étagés présentent une forme cylindrique et que les axes de rotation des premiers satellites étagés (8, 10) sont inclinés radialement d'un angle défini par rapport à l'axe principal de la boîte de vitesses.

6. Boîte de vitesses planétaire selon la revendication 4, **caractérisée** en ce que les petites roues étagées (10) des premiers satellites étagés ont une forme conique et que les axes de rotation des premiers satellites étagés se trouvent en position parallèle à l'axe principal de la boîte de vitesses.

7. Boîte de vitesses planétaire selon une des revendications 1 à 3, **caractérisée** en ce que la couronne (12) présente une forme intérieure conique.

8. Boîte de vitesses planétaire selon la revendication 7, **caractérisée** en ce que les petites roues étagées (10) des premiers satellites étagés ont une forme conique et que les axes de rotation des premiers satellites étagés (8, 10) sont inclinés radialement d'un angle défini par rapport à l'axe principal de la boîte de vitesses.

9. Boîte de vitesses planétaire selon les revendications 6 ou 8, **caractérisée** en ce que les grandes roues étagées (8) des premiers satellites étagés ont une forme conique et en ce qu'elles présentent des cônes orientés dans le même sens que les petites roues étagées (10) des premiers satellites étagés.

10. Boîte de vitesses planétaire selon les revendications 6 ou 8, **caractérisée** en ce que les grandes roues étagées (8) des premiers satellites étagés ont une forme conique et en ce qu'elles présentent des cônes orientés dans le sens opposé des petites roues étagées (10) des premiers satellites étagés.

11. Boîte de vitesses planétaire selon au moins une des revendications de 1 à 8, **caractérisée** en ce que les grandes roues étagées (4, 8) d'au moins un des groupes de satellites étagés ont une forme quasi cylindrique et en ce que les roues (2, 6) engrenant avec ces roues étagées ont une forme conique.

12. Boîte de vitesses planétaire selon au moins une des revendications de 1 à 11, **caractérisée** en ce que tous les axes des satellites et l'axe principal de la boîte de vitesses se croisent dans un point commun.

13. Boîte de vitesses planétaire selon au moins une des revendications de 1 à 12, c**caractérisée** en ce que les roues engrenantes d'au moins un groupe ont une denture hélicoïdale.

14. Boîte de vitesses planétaire selon la revendication 13, **caractérisée** en ce que les deux roues étagées d'au moins un groupe de satellites étagés ont une denture hélicoïdale et en ce que les angles d'hélice des dentures des deux roues étagées ont le même sens directionnel.

15. Boîte de vitesses planétaire selon la revendication 14, **caractérisée** en ce que le rapport des tangentes des angles d'hélice est approximativement égal au rapport du diamètre des cercles primitifs de fonctionnement des roues étagées des satellites étagés.

16. Boîte de vitesses planétaire selon au moins une des revendications de 1 à 15, **caractérisée** en ce que les deuxièmes satellites étagés (4, 6) ont essentiellement le même encombrement axial qu'occupent déjà les premiers satellites étagés (8, 10).

17. Boîte de vitesses planétaire selon la revendication 16, **caractérisée** en ce que les grandes roues étagées (8) des premiers satellites étagés sont disposées axialement d'un côté de la couronne (12a) et en ce que les grandes roues étagées (4) des deuxièmes satellites étagés sont disposées axialement de l'autre côté de la couronne (12a).

18. Boîte de vitesses planétaire selon au moins une des revendications de 1 à 17, **caractérisée** en ce que les deuxièmes satellites étagés (4, 6) sont logés dans le porte-satellites (24), par logement en porte à faux des petites roues étagées (6) entre respectivement deux grandes roues étagées (8) des premiers satellites étagés, et respectivement à l'aide d'un autre roulement (28) écarté axialement.

19. Boîte de vitesses planétaire selon au moins une des revendications de 1 à 18,
**caractérisée** en ce que l'arbre central mené (20) est logé, par logement en porte à faux du pignon solaire (2) entre les grandes roues étagées (4) des deuxièmes satellites étagés, et à l'aide d'un autre roulement (22) écarté axialement.

20. Boîte de vitesses planétaire selon au moins une des revendications de 1 à 19, **caractérisée** en ce que entre l'élément d'appui et la sortie de la boîte de vitesses est situé un roulement principal (34) absorbant les forces motrices.

21. Boîte de vitesses planétaire selon la revendication 20, **caractérisée** en ce que les chemins des corps de roulement du palier principal (34) sont incorporés directement dans les composants concernés (12b, 24).

22. Boîte de vitesses planétaire selon la revendication 21, **caractérisée** en ce que la couronne (12) est dotée d'une première partie à denture intérieure (12a) et une deuxième partie (12b) dotée d'un chemin de corps de roulement incorporé.

23. Boîte de vitesses planétaire selon au moins une des revendications de 20 à 22, **caractérisée** en ce que le palier principal (34) est un roulement à rouleaux en croix.

24. Boîte de vitesses planétaire selon au moins une des revendications de 1 à 23, **caractérisée** en ce que la position de rotation relative des petites et grandes roues étagées de respectivement au moins un des satellites étagés, dont les grandes satellites étagés engrènent en même temps avec une roue interposée entre ces roues étagées, peut être réglée au moins une fois.

25. Boîte de vitesses planétaire selon la revendication 24, **caractérisée** en ce que la position de rotation relative des grandes et petites roues étagées d'un des satellites étagés peut être réglée, lors du montage, par collage et/ou emmanchement thermique d'une roue étagée sur un arbre solidaire de l'autre roue étagée.

26. Boîte de vitesses planétaire selon la revendication 25, **caractérisée** en ce que la position de rotation relative des grandes et petites roues étagées d'un des satellites étagés peut être réglée au moyen d'un accouplement par bride détachable, sachant que les éléments de fixation (42) présentent dans l'état détaché dans les trous passants associés (43) un jeu tangentiel.

27. Boîte de vitesses planétaire selon la revendication 26, **caractérisée** en ce que le nombre de dents de la roue étagée réglable (8) ne peut pas être divisé en nombres entiers par le nombre des trous passants (43).

28. Boîte de vitesses planétaire selon au moins une des revendications de 1 à 23, **caractérisée** en ce que une première partie d'un satellite étagé composé de deux parties (4, 6, 8, 10) présente un prolongement d'arbre (82) pour l'accouplement craboté avec un moyeu d'une grande roue étagée (4, 8), en ce que la denture du prolongement de l'arbre présente le même nombre de dents que la denture d'engrènement de la petite roue étagée (6, 10) et en ce que les entredents des deux dentures ont appioximativement la même position dans la zone de raccordement.

29. Boîte de vitesses planétaire selon au moins une des revendications de 1 à 28, **caractérisée** en ce que au moins pour un des groupes de satellites étagés (8, 10, 4, 6) le nombre de dents des grandes roues étagées (8, 4) est divisible, en nombres entiers, par le nombre de dents des petites roues étagées (10, 6).

30. Boîte de vitesses planétaire selon au moins une des revendications de 1 à 29, **caractérisée** en ce que l'arbre central mené (20) est un arbre creux.

31. Boîte de vitesses planétaire selon au moins une des revendications de 1 à 30, **caractérisée** en ce que les lignes de jonction des centres des roues de deux premiers satellites étagés formant un couple, par rapport au centre du pignon solaire (axe principal de la boîte de vitesses), sont compris dans un angle inférieur à 90°.

32. Boîte de vitesses planétaire selon au moins une des revendications de 1 à 31, **caractérisée** en ce que l'arbre central (20) lié au pignon solaire (2) est mené par un étage de pignons cylindriques (46, 48) disposé de façon excentrique.

33. Boîte de vitesses planétaire selon au moins une des revendications de 30 à 32, **caractérisée** en ce que dans l'arbre central creux (20) se trouve une douille (50).

34. Boîte de vitesses planétaire selon au moins une des revendications de 6 ou 9 à 33, **caractérisée** en ce que les premiers satellites étagés (8, 10) sont logés dans le porte-satellites (24) et en ce qu'ils peuvent être déplacés en sens axial le long de leur axe de satellite, et en ce que respectivement un élément élastique (56), pour la transmission d'une force axiale appropriée à compenser le jeu de la denture, est situé entre le premier satellite étagé et le porte-satellites.

35. Boîte de vitesses planétaire selon la revendication 34, **caractérisée** en ce que l'élément élastique est un ressort hélicoïdal à précontrains (56), situé à l'intérieur d'un trou (62) dans le satellite étagé (8, 10) entre un élément d'appui (70) fixé dans le satellite étagé et un autre élément d'appui (68) accouplé axialement au porte-satellites (24), et en ce qu'il est prévu un dispositif de réglage pour la régulation d'une course maximale.
